# EUROPEAN PATENT APPLICATION

(11) **EP 1 385 351 A1**
(43) Date of publication of application: **28.01.2004**
(21) Application number: 03254535.2
(22) Date of filing: 17.07.2003
(51) Int. Cl.: H04Q 7/38

(54) **Logging mobile devices onto multiple networks**

(30) Priority: 24.07.2002 US 202691
(71) Applicant: Hewlett-Packard Company, Palo Alto, CA 94304 (US)
(72) Inventor: Liang, Thomas T., Salem OR 97302 (US); Esterberg, Dennis R., Philomath OR 97370 (US)
(74) Representative: Tollett, Ian

(57) **Abstract**

Various systems, methods, and computer programs embodied in computer readable mediums are provided for accessing a number of networks (129) with a mobile device (100). In this respect, accessing the networks (129) involves storing a number of network configurations (146) in the mobile device (100) and selecting one of the network configurations (146) in the mobile device (100) to be used to log the mobile device (100) onto a corresponding one of the networks (129). When a selection is made, the mobile device (100) is logged onto the corresponding one of the networks (129) using the selected one of the network configurations (146).

## Description

This invention is related to a method and system for accessing a number of networks with a mobile device. Mobile computing has become commonplace. Networking among computer devices has also become commonplace. From time to time, current users of mobile computer systems may wish to link their mobile computer systems to more than one network to access resources on such networks. For example, a user of a mobile device may employ a network at home and may access a network at their place of employment. As such, they may wish to be able to log on to one or the other network at a given time. Unfortunately, different networks often employ different network configurations. Consequently, the mobile computer system needs to be configured for each of the networks. This may be done, for example, by providing a network card for each of the networks that is plugged into the mobile computer system when the user wishes to log on to a respective one of the networks. However, this solution is clumsy and the network cards may be lost or damaged.

A number of preferred embodiments of the invention can be understood with reference to the following drawings. The components in the drawings are not necessarily to scale. Also, in the drawings, like reference numerals designate corresponding parts throughout the several views.
FIG. 1 is a block diagram of a mobile computer system that employs network connect logic according to an embodiment of the present invention;
FIG. 2 is a drawing of an exemplary graphical user interface generated by the network connect logic of FIG. 1;
FIG. 3 is an exemplary flow chart of the network connect logic of FIG. 1;
FIG. 4 is an exemplary flow chart of a first version of automated selection logic employed in the network connect logic of FIG. 1;
FIG. 5 is an exemplary flow chart of a second version of automated selection logic employed in the network connect logic of FIG. 1;
FIG. 6 is an exemplary flow chart of a third version of automated selection logic employed in the network connect logic of FIG. 1; and
FIG. 7 is an exemplary flow chart of manual selection logic employed in the network connect logic of FIG. 1.

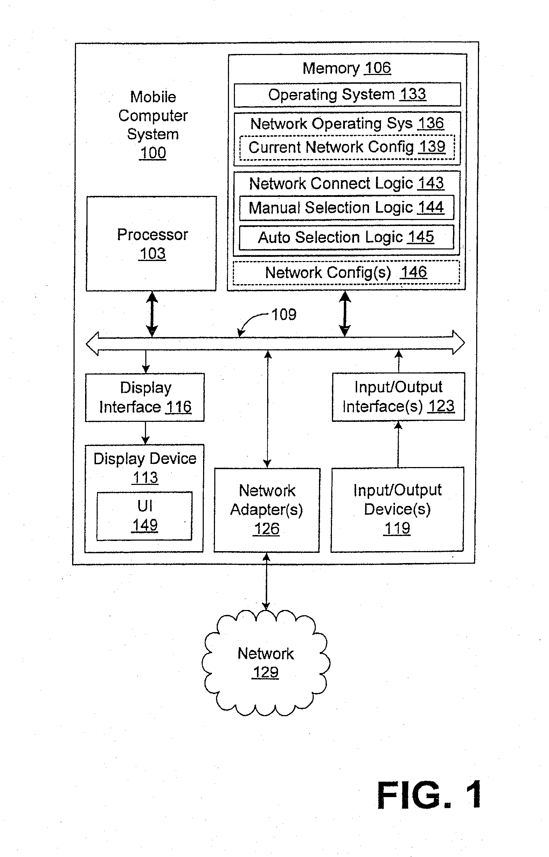

With reference to FIG. 1, shown is a block diagram of a mobile computer system 100 according to an embodiment of the present invention. The mobile computer system 100 includes, for example, a processor circuit having a processor 103 and a memory 106, both of which are coupled to a local interface 109. The mobile computer system 100 also includes a display device 113 that is coupled to the local interface 109 through a display interface 116. The display interface 116 may be, for example, a video card or other appropriate interface device. In addition, the mobile computer system 100 includes one or more input/output devices 119, each of which are coupled to the local interface 109 by an appropriate input/output interface 123. In this respect, the input/output devices 119 may be, for example, peripheral devices such as a keyboard, keypad, touch pad, touch screen, microphone, scanner, mouse, joystick, or one or more push buttons, etc. The input/output devices 119 may also include indicator lights, speakers, printers, etc. The display device 113 may be, for example, a cathode ray tube (CRT), liquid crystal display screen, gas plasma-based flat panel display, or other type of display device, etc.

The mobile computer system 100 also includes one or more network adapters 126 that is/are employed to couple the mobile computer 100 to a network 129. In this respect, the network adapter 126 may be, for example, a network interface card such as an Ethernet card or other network adapter as can be appreciated by those with ordinary skill in the art. The network 129 may be, for example, the Internet, intranets, wide area networks (WANs), local area networks, wireless networks, or other suitable networks, etc., or any combination of two or more such networks. The network 129 may be, for example, an Ethernet network or may employ other network technologies.

A number of components are stored in the memory 106 and are executable by the processor 103 during the operation of the mobile computer system 100. Such components include, for example, an operating system 133 and a network operating system 136. The network operating system 136 includes a current network configuration 139 that is employed to log on to the network 129 as will be discussed. Also, the mobile computer system 100 includes network connect logic 143 that employs manual selection logic 144 and automated selection logic 145.

In addition, a number of network configurations 146 are stored in the memory 106 for use in communicating with various networks 129. The current 20 network configuration 139 is selected from the number of network configurations 146 that are stored in the memory 106. The selection may be made manually or automatically as will be discussed. !f automatic selection is implemented, any one of a number of approaches described herein may be employed. Alternatively, if one of the manual and automatic selection approaches fails, then any other one of the manual and automatic selection approaches may be employed in one or more subsequent attempts to log onto a respective network 129.

Also, when executed, the network connect logic 143 causes the generation of a user interface 149 on the display device 113 that may be manipulated by a user using appropriate input device 119 such as, for example, a mouse, keyboard or other device.

The memory 106 is defined herein as both volatile and nonvolatile memory and data storage components. Volatile components are those that do not retain data values upon loss of power. Nonvolatile components are those that retain data upon a loss of power. Thus, the memory 106 may comprise, for example, random access memory (RAM), read-only memory (ROM), hard disk drives, floppy disks accessed via an associated floppy disk drive, compact discs accessed via a compact disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

In addition, the processor 103 may represent multiple processors and the memory 106 may represent multiple memories that operate in parallel. In such a case, the local interface 109 may be an appropriate network that facilitates communication between any two of the multiple processors, between any processor and any one of the memories, or between any two of the memories etc. The processor 103 may be electrical, optical, or molecular in nature.

The operating system 133 is executed to control the allocation and usage of hardware resources in the mobile computer system 100 such as the memory, processing time and peripheral devices. In this manner, the operating system 133 serves as the foundation on which applications depend as is generally known by those with ordinary skill in the art.

Next, a brief overview of the operation of the mobile computer system 100 and the network connect logic 143 is described. For purposes of this description, assume that a user wishes to log onto different ones of the networks 129 with the mobile computer system 100 at different times. For example, the user may employ a first network 129 at their residence and a second network 129 at the their workplace. Depending upon whether the user is at home or at work, the user would like to log the mobile computer system 100 with either network 129 as needed.

The network operating system 136 is executed by the processor 103 to effect data communications with a network 129 through the network adapter 126. However, the network 129 located at the home of the user may operate according to a different network configuration 146 than the network 129 at the user's place of employment. As a consequence, the network operating system 136 needs to employ configuration 139 that is associated with the respective network 129 that is coupled to the mobile network system 100 at a given time. Each of the network configurations 146 includes a number of parameters associated with the respective networks such as, for example, protocol(s) such as Transmission Control Protocol/Internet protocol (TCP/IP), Internet Packet Exchange/Sequenced Packet Exchange (IPX/SPX) and other protocols; addresses such as an Internet Protocol (IP) address in the case of TCP/IP, the addresses being either fixed or dynamically obtained; encryption settings (especially for wireless networks); and other parameters.

The network connect logic 143 addresses this problem by insuring that the appropriate network configuration 146 is employed as the current network configuration 139 by the network operating system 136 to facilitate network communications with the appropriate network 129 to which the mobile computer system 100 is coupled. In this respect, the network connect logic 143 facilitates a selection of one of the network configurations 143 that is to be used to log the mobile computer system 100 onto an appropriate network 129.

The selection of the particular network configuration 146 to be employed as the current network configuration 139 can be performed manually or automatically. In the case of automatic selection, the network connect logic 143 may make the selection based upon a physical proximity of the mobile computer system 100 to a particular network 129 or network port of such network by using 30 Global Positioning Satellite (GPS) information or other positioning information. In such case, the mobile computer system 100 would include a GPS positioning system or its equivalent to determine its physical location. Alternatively, the network 129 may be able to provide a network identifier to the network connect logic 143 that is associated with one of the network configurations 146 in the memory 106. Upon receiving the network identifier, the network connect logic 143 can thus determine which network configuration 146 is to be used.

As an additional alternative, the automatic selection of the network configuration 146 to be employed with the network operating system 136 may be performed using an iterative approach. Specifically, the network connect logic 143 may repetitively select network configurations 146 that are employed in an attempt to log on to the network 129 coupled to the mobile computer system 100 until a successful log-on occurs. As such, the current network configuration 139 taken from the network configurations 146 is that which is associated with the network 129 in question because the log-on was successful.

There may be other automated approaches in addition to those described above that can be employed to successfully select one of the network configurations 146 to be used to log onto a respective network 129, wherein the approaches described above are provided as examples.

In addition, if one of the exemplary manual and automatic selection approaches described above fails, then any other one of the manual and automatic selection approaches may be employed in one or more subsequent attempts to log onto a respective network 129.

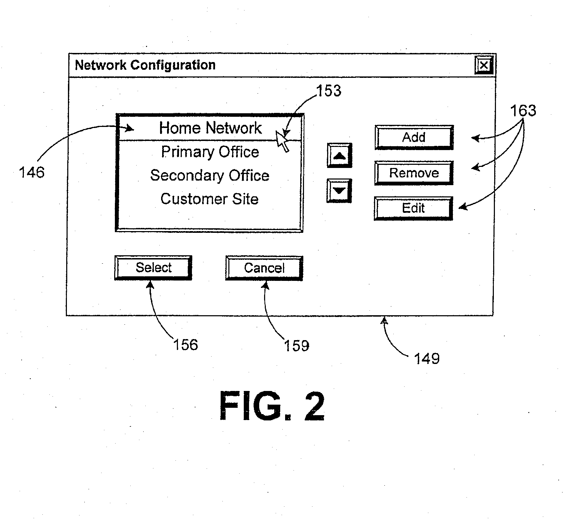

Turning then to FIG. 2, shown is an exemplary user interface 149 that may be generated by the network connect logic 143 to facilitate a manual selection of one of the network configurations 146 to be employed as the current network configuration 139 in the network operating system 136 in order to successfully log on to an appropriate network 129. In this respect, the user interface 149 lists a number of network configurations 146 that may be highlighted, for example, by positioning a cursor 153 thereon pressing a button on a mouse, etc. Such an action is often referred to as "clicking" on a selected component. Once highlighted, a particular network configuration 146 may be selected as the current network configuration 139 by manipulating the "select" button 156.

If the user does not wish to select a network configuration 146, the user may click on the "cancel" button 159. Thereafter, further operation of the mobile computer system 100 is commenced locally without logging onto a network 129 (FIG. 1). In addition, network configurations 146 may be added or removed from those listed in the mobile computer system 100, or may be edited by manipulating an appropriate one of the add, remove or edit buttons 163. Specifically, clicking on or otherwise manipulating the add, remove or edit buttons 163 will cause the display of further user interfaces 149 that facilitate the addition, removal or editing of the network configurations 146.

The various components of the user interface 149 described above are provided merely as examples to illustration the operation of the present invention. As such, it is understood that many different types of graphical components may be employed that differ from those discussed.

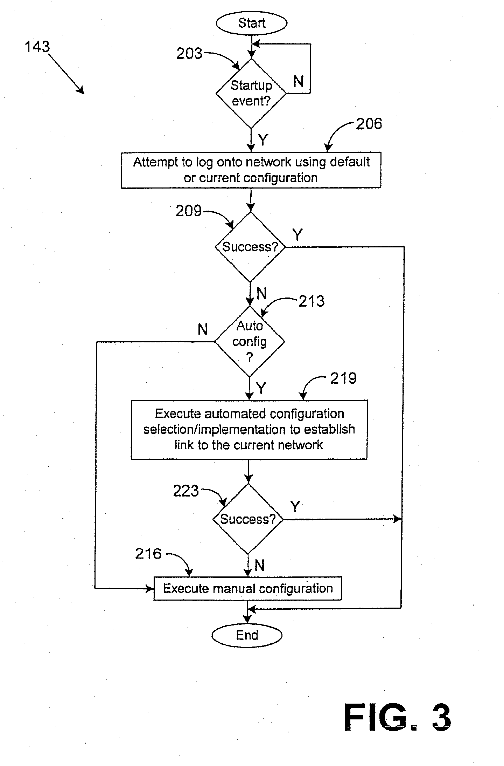

With reference to FIG. 3, shown is an exemplary flow chart that provides an example of the operation the network connect logic 143 according to an embodiment of the present invention. Alternatively, the flow chart of FIG. 3 may be viewed as depicting steps of a method implemented in the mobile computer system 100 (FIG. 1). In addition, it is noted that FIGS. 3-7 provides an example of a particular architecture to illustrate the operation of the network connect logic 143. However, it is understood that alternative architectures may be employed that accomplish the same functionality described herein, such alternative architectures falling within the scope of the present invention.

Beginning with box 203, the network connect logic 143 first determines whether a configuration event has occurred. A configuration event is one that initiates the operation of the network connect logic 143 in determining which network configuration 146 (FIG. 1) is to be employed to log on to a particular network 129 (FIG. 1). In this respect, a configuration event may be, for example, a power up of the mobile computer system 100 or a detection of a physical connection between the network adapter 126 (FIG. 1) and the network 129. A configuration event may also include a manipulation of a push button or other input device 119 (FIG. 1), an icon or other graphical component, or other trigger mechanism that is specifically dedicated to initiating an execution of the network connect logic 143.

Once a configuration event has occurred in box 203, then the network connect logic 143 proceeds to box 206 in which an attempt to log onto the network 129 is made using a default network configuration 139 (FIG. 1). This assumes that a user will most often couple the mobile computer system 100 with a specific one network 129. Then in box 209, if the mobile computer system 100 successfully logs onto the desired network 129, then the network connect logic 143 ends. Otherwise, the network connect logic 143 proceeds to box 213. In box 213, it is determined whether the network connect logic 143 is to automatically select one of the network configurations 146 to be used as the current network configuration 139 using one of a number of automated selection approaches. The automated selection may be enabled or disabled depending upon preferences of a user. Alternatively, the automated selection may not be available depending on the capabilities of the mobile computer system 100 as will be described.

If automated configuration is not to be implemented in box 213, then the network connect logic 143 proceeds to box 216 in which a manual selection of the appropriate network configuration 146 is implemented. If automatic configuration is to be implemented in box 213, then the network connect logic 143 proceeds to box 219.

In box 219, the network connect logic 143 executes an automated selection of a respective one of the network configurations 146 to be employed as the current network configuration 139. The network connect logic 143 may include any one or more of several different automated configuration algorithms that are described with reference to later figures. Alternatively, other automated selection approaches may be employed that are not expressly described herein. may be executed as part of the network connect logic 143. Also, two or more of the automated selection approaches may be employed in succession in multiple attempts to log onto the desired network 129 until success is achieved.

Next, in box 223, if a successful log-on to a respective network 129 is achieved, then the network connect logic 143 ends. Otherwise, the network connect logic 143 proceeds to box 216 to implement a manual selection of the desired network configuration 146 to be employed as the current network configuration 139 to log the mobile computer system 100 onto an appropriate network 129.

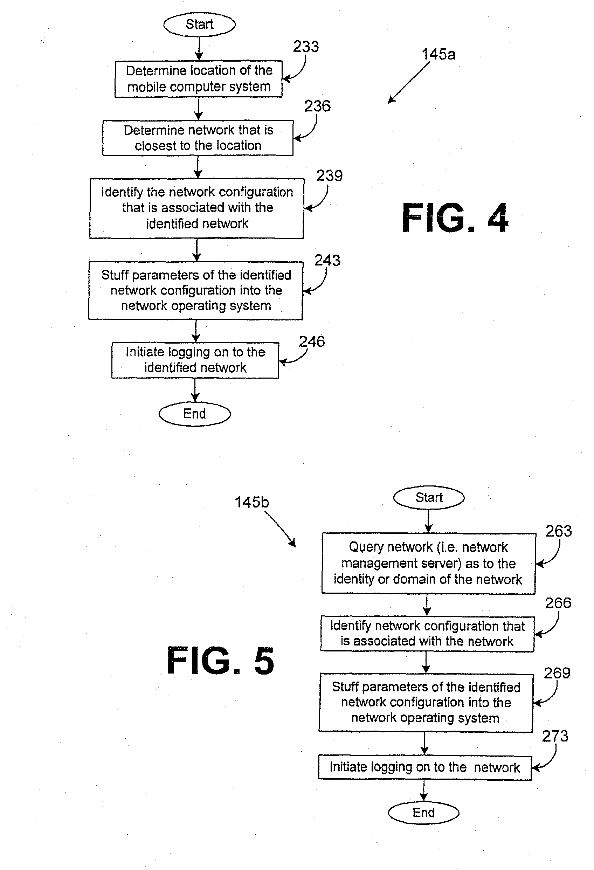

With reference to FIG. 4, shown is one example of the automated selection logic 145a according to an embodiment of the present invention that may be implemented to facilitate an automated selection of a respective one of the network configurations 146 (FIG. 1) for use as the current network configuration 139 (FIG. 1) to be used to log the mobile computer system 100 10 (FIG. 1) onto a respective network 129 (FIG. 1). Alternatively, the flow chart of FIG. 4 may be viewed as depicting steps of a method implemented in the mobile computer system 100 to achieve an automated selection of one of the network configurations 146. The automated selection logic 145a assumes that existence of a GPS system or other positioning system in the mobile computer system 100.

Beginning with box 233, first the automated selection logic 145a determines the location of the mobile computer system 233. This may be accomplished by interfacing with a GPS system or other positioning system in the mobile computer system 100. Thereafter, in box 236 the automated selection logic 145a determines which one of the networks 129 is closest to the current location of the mobile computer system 100. To make this determination, the location of each of the networks 129 is stored in the memory 106 (FIG. 1). Thereafter, in box 239, the network configuration that is associated with the network identified in box 236 is identified. Thereafter, in box 243, the parameters of the identified network configuration 146 are stuffed into the network operating system 136 as the current network configuration 139. Then, in box 249, the automated selection logic 145a initiates the functions of the network operating system 136 to log onto the identified network 129 using the current network configuration 139. Thereafter, the automated selection logic 145a ends.

With regard to FIG. 5, shown is an example of a second embodiment of the automated selection logic 145b according to an embodiment of the present invention. Alternatively, the flow chart of FIG. 5 may be viewed as depicting steps of a method implemented in the mobile computer system 100 (FIG. 1) to achieve an automated selection of one of the network configurations 146 (FIG. 1). The automated selection logic 145b is implemented when a coupling between the network adapter 126 (FIG. 1) and a network 129 (FIG. 1) are detected.

Beginning with box 263, the automated selection logic 145b queries the network 129 coupled to the network adapter 126 as to the identity or domain of the respective network 129 that is coupled to the network adapter 126. In querying the network 129, the automated selection logic 145b may specifically transmit a query a network management server or other device on the network 129 as can be appreciated by those with ordinary skill in the art. Thereafter, in box 266 a network configuration 146 that is associated with the network 129 queried in box 263 is identified. Then, in box 269, the parameters of the identified configuration 146 are stuffed into the network operating system 136 as the current network configuration 139 (FIG. 1). Finally, in box 273 the automated selection logic 145b initiates logging the mobile computer system 100 onto the network 129.

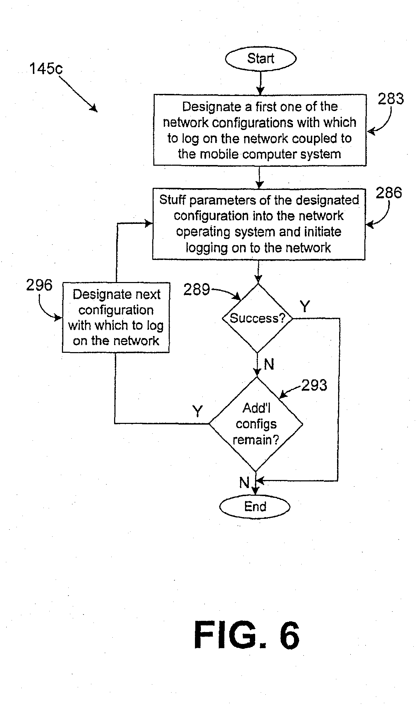

With reference to FIG. 6, shown is a flow chart that provides a third example of the automated selection logic 145c according to an embodiment of the present invention. Alternatively, the flow chart of FIG. 5 may be viewed as depicting steps of a method implemented in the mobile computer system 100 (FIG. 1) to achieve an automated selection of one of the network configurations 146 (FIG.1).

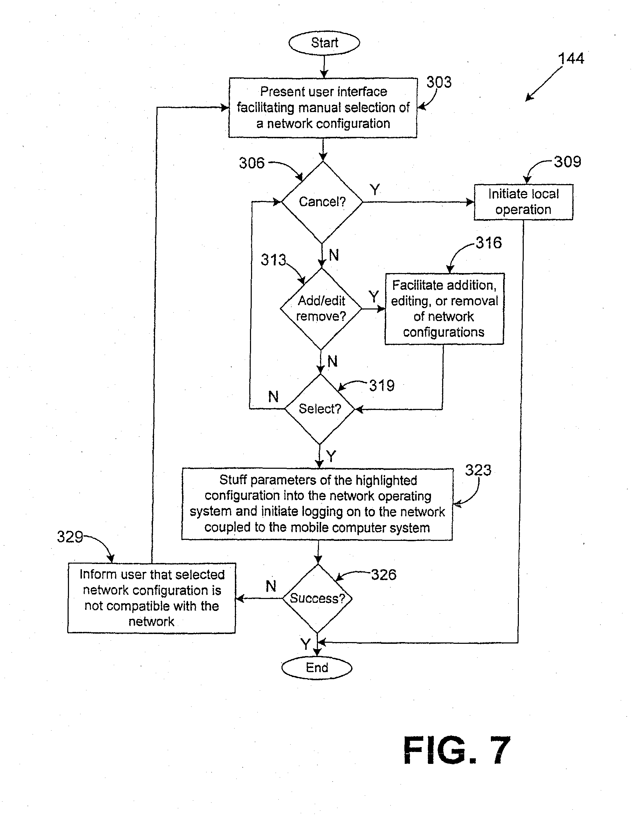

Beginning with box 283, the automated selection logic 145C first designates one of the network configurations 146 with which to log onto to the network 129 (FIG. 1) currently coupled to the network adapter 126 (FIG, 1). Thereafter, in box 286, the parameters of the designated configuration 146 are stuffed into the network operating system 136 (FIG. 1) and the automated selection logic 145c initiates logging onto the network 129. Thereafter, in box 289, if a successful logon occurs, then the automated selection logic 145c ends. Otherwise, the automated selection logic 145c proceeds to box 293. In box 293, the automated selection logic 145c determines whether additional network configurations 146 are stored in the memory 106 that have not been employed in an attempt to logon to the network 129. If such is the case, then the automated selection logic 145c proceeds to box 296 in which the next network configuration 146 is designated with which to attempt to log on to the network 129. Thereafter, the automated selection logic 14c reverts back to box 286. On the other hand, if there are no further network configurations 146 stored in the memory 106 that have yet to be employed in an attempt to log on to the network 129, then the automated selection logic 145c ends. With reference to FIG. 7, shown is a flow chart of the manual selection logic 144 that is implemented in order to facilitate a manual selection of one of the network configurations 146 (FIG. 1) to be employed as the current network configuration 139 (FIG. 1) in the network operating system 136 (F!G. 1). Alternative, the flow chart of FIG. 7 may be viewed as depicting steps in a 15 method implemented in the mobile computer system 100 (FIG. 1) to select an appropriate network configuration 146 for use in the network operating system 136 as the current network configuration 139.

Beginning with box 303, the manual selection logic 144 presents the user with a user interface 149 (FIG. 1) on the display device 113 (FIG. 1) to facilitate a manual selection of one of the network configurations 146 to be employed as the current network configuration 139 in the network operating system 136 to log on to an appropriate network 129 (FIG. 1). Thereafter, in box 306, if a user indicates that they do not wish to log on to a network by selecting the "cancel" button 159 (FIG. 2), for example, then the manual selection logic 144 proceeds to box 309 in which local operation of the mobile computer system 100 is initiated without attempting to log on to a network 129. Thereafter, the manual selection logic ends.

However, if in box 306 the user has not indicated a desire to bypass logging onto a network, then in box 313 the manual selection logic 144 determines whether a network configuration 146 is to be added or removed from those network configurations 146 stored in the memory or whether one of the network configurations 146 is to be edited due to a manipulation of the add, remove, and edit buttons 163 (FIG. 2). If such is the case, then the manual selection logic 144 proceeds to box 316 in which one or more user interfaces 149 are presented to the user to facilitate the addition, removal, or editing of various network configurations 146. Thereafter, the manual selection logic 144 proceeds to box 319. Likewise, assuming that no network configuration 146 is to be added, edited, or removed in box 313, then the manual selection logic 144 proceeds to box 319.

In box 319, it is determined whether the user has selected a particular network configuration 146 to be employed as the current network configuration 139. If so, then the manual selection logic 144 proceeds to box 323. Otherwise, the manual selection logic 144 reverts back to box 306. Thus, in boxes 306, 313, and 319, the manual selection logic 144 waits for user action with respect to the user interface presented on the display device 113 before performing an appropriate task.

In box 323, assuming that a user has selected one of the network configurations 146 for use as the current network configuration 139 in the network operating system 136 to log on to a particular network 129, then in box 323, the parameters associated with the selected network configuration 146 are stuffed into the network operating system 136. Thereafter, a log-on to the desired network 129 coupled to the computer system 100 is initiated. Then in box 326, if the log-on was successful, then the manual selection logic 144 ends. If the log-on was unsuccessful, then the manual selection logic 144 proceeds to box 329 in which the user is informed through an appropriate user interface 149 that the selected network configuration was not compatible with the desired network 129. Thereafter, the manual selection logic 144 reverts back to box 303 to allow the user to attempt to select another network configuration 146 that would be appropriate to log-on to the desired network 129 or to add or edit an appropriate network configuration 146 to facilitate such logon.

Although the network connect logic 143 is embodied in software or code executed by general purpose hardware as discussed above, as an alternative the network connect logic 143 may also be embodied in dedicated hardware or a combination of software/general purpose hardware and dedicated hardware.

If embodied in dedicated hardware, the network connect logic 143 can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, programmable gate arrays (PGA), field programmable gate arrays (FPGA), or other components, etc. Such technologies are generally well known by those skilled in the art and, consequently, are not described in detail herein.

The flow charts of FIGS. 3-7 show the architecture, functionality, and operation of an implementation of the network connect logic 143. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor in a computer system or other system. The machine code may be converted from the source code, etc. If embodied in hardware, each block may represent a circuit or a number of interconnected circuits to implement the specified logical function(s).

Although the flow charts of FIGS. 3-7 show a specific order of execution, it is understood that the order of execution may differ from that which is depicted. For example, the order of execution of two or more blocks may be scrambled relative to the order shown. Also, two or more blocks shown in succession in FIGS. 3-7 may be executed concurrently or with partial concurrence. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present invention.

Also, where the network connect logic 143 comprises software or code, it can be embodied in any computer-readable medium for use by or in connection with an instruction execution system such as, for example, a processor in a computer system or other system. In this sense, the logic may comprise, for example, statements including instructions and declarations that can be fetched from the computer-readable medium and executed by the instruction execution system. In the context of the present invention, a "computer-readable medium" can be any medium that can contain, store, or maintain the network connect logic 143 for use by or in connection with the instruction execution system. The computer readable medium can comprise any one of many physical media such as, for example, electronic, magnetic, optical, electromagnetic, infrared, or semiconductor media. More specific examples of a suitable computer-readable medium would include, but are not limited to, magnetic tapes, magnetic floppy diskettes, magnetic hard drives, or compact discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

Although the invention is shown and described with respect to certain embodiments, it is obvious that equivalents and modifications will occur to others skilled in the art upon the reading and understanding of the specification. The present invention includes all such equivalents and modifications, and is limited only by the scope of the claims.

## Claims

1. A method for accessing a number of networks (129) with a mobile device (100), comprising:
storing a number of network configurations (146) in the mobile device (100);
associating a location of each of a number of networks (129) with a corresponding one of the network configurations (146);
determining a location of the mobile device (100);
selecting the one of the network configurations (146) that corresponds to the one of the networks (129) that is closest to the mobile device (100);
logging the mobile device (100) onto the one of the networks (129) that is closest to the mobile device (100) using the selected one of the network configurations (146).

2. The method of claim 1, wherein the selecting of one of the network configurations (146) in the mobile device (100) to be used to log the mobile device (100) onto the corresponding one of the networks (129) further comprises manually selecting the one of the network configurations (146) by manipulating a user interface (149) upon a failure of the mobile device (100) to log onto the one of the networks (129) that is closest to the mobile device (100) using the selected one of the network configurations (146).

3. The method of claim 2, further comprising:
detecting a coupling of the mobile device (100) to the one of the networks (129) that is closest to the mobile device (100); and
automatically presenting the user interface (149) to a user to facilitate the manual selection of the one of the network configurations (146) upon detecting the coupling of the mobile device (100) to the one of the networks (129) that is closest to the mobile device (100).

4. The method of claim 2, further comprising presenting the user interface (149) to a user to facilitate the manual selection of the one of the network configurations (146) upon detecting a manipulation of a trigger mechanism.

5. A system in a mobile device (100) for accessing a number of networks (129), comprising:
a processor circuit having a processor (103) and a memory (106);
a number of network configurations (146) stored in the memory (106); and
a network connect logic (143) stored in the memory (106) and executable by the processor (103), the network connect logic (143) comprising:
logic that associates a location of each of a number of networks (129) with a corresponding one of the network configurations (146);
logic that determines a location of the mobile device (100);
logic that selects the one of the network configurations (146) that corresponds to the one of the networks (129) that is closest to the mobile device (100); and
logic that logs the mobile device (100) onto the one of the networks (129) that is closest to the mobile device (100) using the selected one of the network configurations (146).

6. The system of claim 5, further comprising logic that generates a user interface (149) that facilitates a manual selection of the one of the network configurations (146) by a user upon a failure of the mobile device (100) to log onto the one of the networks (129) that is closest to the mobile device (100) using the selected one of the network configurations (146).

7. The system of claim 5, further comprising:
logic that communications with a device on the one of the networks (129) to which the mobile device (100) is coupled to determine an identity of the one of the networks (129) upon a failure of the mobile device (100) to log onto the one of the networks (129); and
logic that determines which of the network configurations (146) is associated with the one of the networks (129).

8. A program embodied in a computer readable medium for logging a mobile device onto any one of a number of networks, comprising:
a number of network configurations;
code that associates a location of each of the networks with a corresponding one of the network configurations;
code that determines a location of the mobile device;
code that selects the one of the network configurations that corresponds to the one of the networks that is closest to the mobile device; and
code that logs the mobile device onto the one of the networks that is closes to the mobile device using the selected one of the network configurations.
